# EUROPEAN PATENT SPECIFICATION

(11) **EP 4 308 847 B1**
(45) Date of publication and mention of the grant of the patent: **06.08.2025**
(21) Application number: 21736994.1
(22) Date of filing: 23.06.2021
(51) Int. Cl.: F17C 13/00, F17C 9/04

(54) **AN ARRANGEMENT FOR MANAGING TEMPERATURE OF LIQUEFIED GAS FUEL IN A FUEL TANK OF A MARINE VESSEL**
ANORDNUNG ZUR TEMPERATURREGELUNG VON FLÜSSIGGASBRENNSTOFF IN EINEM KRAFTSTOFFTANK EINES WASSERFAHRZEUGS
AGENCEMENT POUR GÉRER LA TEMPÉRATURE D'UN CARBURANT GAZEUX LIQUÉFIÉ DANS UN RÉSERVOIR DE CARBURANT D'UN NAVIRE MARIN

(43) Date of publication of application: 24.01.2024
(73) Proprietor: Wärtsilä Gas Solutions Norway AS, 1383 Asker (NO)
(72) Inventor: RUMMELHOFF, Carl Jørgen, 1383 ASKER (NO); GRØNNÆSS, Lars, 1383 ASKER (NO)
(74) Representative: Genip Oy
(86) International application number: PCT/EP2021/067084
(87) International publication number: WO 2022/268306

(56) References cited:
- CN-U- 203 214 195
- KR-A- 20100 089 155
- KR-B1- 102 242 746
- US-B2- 9 574 711

## Description

### Technical field

The present invention relates to an arrangement for managing temperature of liquefied gas fuel in a fuel tank of a marine vessel according to the preamble of claim 1.

### Background art

Invention relates to a field of storing liquefied gas at cold conditions in a pressure proof tank. Liquefied gas as a fuel of prime movers in marine vessels and other mobile power plants has increasingly become of interest while the importance of environmental issues of particularly the exhaust emissions have increased. Fuel which is in gaseous form at normal atmospheric conditions is typically stored in a tank or tanks in liquefied phase at low temperature. Typically, the tank is filled so that there is always gas in liquid phase and gaseous phase, the liquid substance being below the gas in gaseous phase, which reserves a space in the upper part of the tank. Even if the tanks are insulated as such the heat losses cause natural evaporation of the gas increasing the pressure in the tank. This can be handled by removing the excessive vapour and delivering it to e.g., an engine as fuel or another type of oxidizer, or optionally install refrigeration unit(s) in connection with a tank to prevent excessive increase of pressure.

US 3453836 discloses a tanker for transporting liquefied petroleum gases including a plurality of insulated cargo tanks having the same or different liquefied cargoes therein. In order to control tank conditions, a refrigerating unit is provided with cooling coils extending from the unit to the tops or trunks of each tank so as to cool cargo liquids and to cool and condense cargo vapours within the tank so that condensate is returned to the tank interior. The refrigerating unit and coils are used to extract heat from the cargo liquid and during purging and tank cooldown processes in order to cool the cargo vapours and return the condensed vapours back to the bottom of the tank.

CN 203214195U disclose a thermoelectric power generation technologybased LNG (Liquefied Natural Gas) engine energy recovery device, which comprises a thermoelectric generator. An exhaust port of an LNG gas tank is connected to the thermoelectric generator through an LNG inlet pipe. The LNG fuel supply system uses a thermoelectric generator to replace the original vaporizer, so that it can complete the LNG gasification function while also using thermoelectric power generation technology for energy recovery installation.

Document KR1020100089155A discloses an LPG fuel injection system of an internal combustion engine. A fuel tank stores the LPG fuel. Fuel is supplied to a cylinder in engine from the fuel supply pipe in connection with the fuel tank. The fuel remaining which is not injected to the cylinder in the engine is returned back to the fuel tank. A thermoelectric element absorbs heat from the fuel in the return pipe and the fuel is cooled prior to its entry into the tank. Accordingly, the inner pressure of the fuel tank is not risen.

MX2016012977A discloses a fuel tank cooler based on thermoelectric cells. The cooler is formed by two arrangements: a first arrangement comprises one or more Peltier thermoelectric cells, arranged throughout the peripheral layer of the tank, wherein the cooling side of the thermoelectric cells is in thermal contact with the surface of the fuel tank; and a second arrangement comprises a condensation passage located outside the tank and comprises one or more Peltier thermoelectric cells, wherein the cooling side of the thermoelectric cells is in thermal contact with the surface of the condensation passage.

KR 102242746 B1 discloses a gas processing system including an arrangement for managing temperature of liquefied gas fuel in a fuel tank of a marine vessel, the arrangement comprising
- a fuel tank,
- a main fuel feed line extending from bottom area of the fuel tank to a gas consumer,
- a fuel transfer pump arranged to the main fuel feed line,
- a first thermoelectric heat exchanger comprising a first heat exchange fluid flow path and a second heat exchange fluid flow path, and a number of thermoelectric generator cells arranged in heat transfer communication with both the first heat exchange fluid flow path and the second heat exchanger fluid flow path, wherein
- the first heat exchange fluid flow path being coupled to the main fuel feed line downstream the fuel transfer pump,
- a second fuel line (L40) being coupled to the second heat exchange fluid flow path, the second fuel line being arranged to lead fuel to the tank via the first thermoelectric heat exchanger.

An object of the invention is to provide arrangement for managing temperature of liquefied gas fuel in a fuel tank of a marine vessel, in which the performance is considerably improved compared to the prior art solutions.

### Disclosure of the Invention

Objects of the invention can be met substantially as is disclosed in the independent claim and in the other claims describing more details of different embodiments of the invention.

According to an embodiment, an arrangement for managing temperature of liquefied gas fuel in a fuel tank of a marine vessel comprises
- a fuel tank,
- a main fuel feed line extending from bottom area of the fuel tank to a gas consumer,
- a fuel transfer pump arranged to the main fuel feed line,
- a first thermoelectric heat exchanger comprising a first heat exchange fluid flow path and a second heat exchange fluid flow path, and a number of thermo electric generator cells arranged in heat transfer communication with both the first heat exchange fluid flow path and the second heat exchanger fluid flow path,
- the first heat exchange fluid flow path being coupled to the main fuel feed line downstream the fuel transfer pump,
- a second fuel line being coupled to the second heat exchange fluid flow path, the second fuel line being arranged to lead fuel to the tank via the first thermoelectric heat exchanger.

By means of the invention t it is possible to cool down the gas in the tank making use of the gas as heat carrier in both of the first and the second heat exchange fluid flow paths of the first thermoelectric heat exchanger.

According to an embodiment, an arrangement for managing temperature of liquefied gas fuel in a fuel tank of a marine vessel a second fuel line is coupled to the second heat exchange fluid flow path, the second fuel line being arranged to lead liquefied gas from the tank to the tank via the first thermoelectric heat exchanger.

By means of this embodiment it is possible to cool down the liquefied gas in the tank making use of the liquefied gas as heat carrier in both of the first and the second heat exchange fluid flow paths of the first thermoelectric heat exchanger.

According to the invention the second fuel line is a branch line, which branches from the main fuel feed line at a location downstream the fuel transfer pump and which branch line is arranged in flow connection with the tank via the thermo electric heat exchanger such that the second heat exchange fluid flow path is coupled to the branch line. By means of this embodiment it is possible to cool down the liquefied gas in the tank making use of the liquefied gas as heat carrier in both of the first and the second heat exchange fluid flow paths of the first thermoelectric heat exchanger driven by the same pump which is also the fuel transfer pump.

According to an embodiment the arrangement comprises an electric power management system connected to the thermo electric generator cells of the first thermoelectric heat exchanger and a polarity control unit of the thermo electric generator cells of the first thermoelectric heat exchanger, which polarity control unit is configured to selectably change the polarity of connection of the thermo electric generator cells of first thermoelectric heat exchanger to the electric power management system. This way the arrangement may be controlled as desired to provide effects of the invention.

According to an embodiment the branch line branches from the fuel feed line at a location upstream the thermo electric heat exchanger, wherein the temperature level of the liquefied gas to be cooled for tank temperature management is initially as low as possible decreasing the required energy for cooling the liquefied gas.

According to an embodiment arrangement comprises a computer control unit adapted to:
- determine temperature of the liquefied gas in the tank, and
   ∘ when the temperature in the tank is higher than a predetermined set temperature:
      □ control a flow control valve of second fuel line to lead liquefied gas to the tank via the thermo electric heat exchanger,
      □ control the electric power management system to start or increase feeding electric power to the thermo electric generator cells and cool down the liquefied gas flowing through the second heat exchange fluid flow path,
   o when the temperature in the tank is lower than or equal to the predetermined set temperature:
      □ control the flow control valve of second fuel line to close to decrease or stop the flow of fuel to the tank via the thermo electric heat exchanger,
      □ control the electric power management system to stop or decrease feeding feed electric power to the thermo electric generator cells.

According to an embodiment arrangement comprises a computer control unit adapted to:
- determine temperature of the liquefied gas in the tank, and
   ∘ when the temperature in the tank is higher than a predetermined set temperature:
      □ control a flow control valve of second fuel line to lead liquefied gas from the main fuel feed line to the tank via the thermo electric heat exchanger,
      □ control the electric power management system to start or increase feeding electric power to the thermo electric generator cells and cool down the liquefied gas flowing through the second heat exchange fluid flow path,
   o when the temperature in the tank is lower than or equal to the predetermined set temperature:
      □ control the flow control valve of second fuel line to close to decrease or stop the flow of fuel from the main fuel feed line to the tank via the thermo electric heat exchanger,
      □ control the electric power management system to stop or decrease feeding feed electric power to the thermo electric generator cells.

According to an embodiment the branch line branches from the fuel feed line at a location downstream the thermo electric heat exchanger.

According to an embodiment the arrangement comprises a second thermoelectric heat exchanger, which comprises a first heat exchange fluid flow path and a second heat exchange fluid flow path, and a number of thermo electric generator cells arranged in heat transfer communication with both the first heat exchange fluid flow path and the second heat exchanger fluid flow path, in which the first heat exchange fluid flow path is coupled to the main fuel feed line downstream the first thermoelectric heat exchanger.

According to an embodiment the second heat exchanger fluid flow path is arranged in heat transfer communication with a heat transfer medium flow circuit of the marine vessel.

According to an embodiment the second heat exchanger fluid flow path is arranged in heat transfer communication with a cooling system of a prime mover of the marine vessel.

According to an embodiment the arrangement comprises an electric power management system connected to the thermo electric generator cells of the first thermoelectric heat exchanger and to the thermo electric generator cells of the second thermoelectric heat exchanger, and the second thermoelectric heat exchanger is configured to produce electric power by its thermo electric generator cells and the electric power management system is configured to supply the electric power to the thermo electric generator cells of the first thermoelectric heat exchanger, so as to cool down the liquefied gas flowing through the second heat exchange fluid flow path of the first thermoelectric heat exchanger to the tank.

This way the tanks temperature and pressure levels can be maintained at desired level making use of high temperature waste heat available in the marine vessel. More specifically the electric power which is fed to the first thermoelectric heat exchanger is obtained from the second thermoelectric heat exchanger using high temperature waste heat.

According to an embodiment the arrangement comprises a first thermoelectric heat exchanger comprising a first heat exchange fluid flow path and a second heat exchange fluid flow path, and a number of thermo electric generator cells arranged in heat transfer communication with both the first heat exchange fluid flow path and the second heat exchanger fluid flow path, and a second thermoelectric heat exchanger comprising a first heat exchange fluid flow path and a second heat exchange fluid flow path, and a number of thermo electric generator cells arranged in heat transfer communication with both the first heat exchange fluid flow path and the second heat exchanger fluid flow path, and a computer control unit adapted to:
- determine temperature of the liquefied gas in the tank, and
   ∘ when the temperature in the tank is higher than a predetermined set temperature:
      □ control a flow control valve of second fuel line to lead liquefied gas from the main fuel feed line to the tank via the second heat exchange fluid flow path of the first thermo electric heat exchanger,
      □ control the electric power management system to receive electric power from the second thermoelectric heat exchanger and to start or increase feeding electric power to the thermo electric generator cells of the first thermoelectric heat exchanger and
      □ cool down the liquefied gas flowing through the second heat exchange fluid flow path of the first thermo electric heat exchanger,
   o when the temperature in the tank is lower than or equal to the predetermined set temperature:
      □ control the flow control valve of second fuel line to close to decrease or stop the flow of fuel from the main fuel feed line to the tank via the first thermo electric heat exchanger,
      □ control the electric power management system to stop or decrease feeding feed electric power to the thermo electric generator cells of the first thermo electric heat exchanger, and control the electric power management system to feed surplus electric energy obtained from the second thermo electric heat exchanger to an electric network.

According to an embodiment the second fuel line extends from upper part of the tank via the second heat exchange fluid flow path of the first thermo-electric heat exchanger to the tank. This provides an effect by means of which it is possible effect on the temperature of the liquefied gas in the tank and thus avoid undesired increase of pressure in the tank.

By the term liquefied gas fuel, it is meant fuel which is in gaseous form at normal atmospheric conditions and stored in a tank in liquefied state.

The invention has several benefits. In general, the invention provides effective way of preventing excessive heating of liquified gas fuel stored in a tank.

The thermoelectric effect refers to phenomena by which either a temperature difference creates an electric potential or an electric potential creates a temperature difference. These phenomena are known more specifically as the Seebeck effect (creating a voltage from temperature difference), Peltier effect (driving heat flow with an electric current), and Thomson effect (reversible heating or cooling within a conductor when there is both an electric current and a temperature gradient). Thermoelectric materials are used in the arrangement for cooling or heating, and to regenerate electricity from temperature difference between the gas flows at different temperatures.

A thermoelectric module is a circuit containing thermoelectric materials which generate electricity from heat directly. A thermoelectric module consists of two dissimilar thermoelectric materials joined at their ends: an n-type (with negative charge carriers), and a p-type (with positive charge carriers) semiconductor. Direct electric current will flow in the circuit when there is a temperature difference between the ends of the materials. Generally, the current magnitude is directly proportional to the temperature difference.

A thermoelectric heat exchanger is a unit comprising flow channels in both lower temperature and higher temperature sides in heat transfer communication with several thermoelectric modules such that medium flowing in the lower and higher temperature flow channels provide desired temperature difference over the thermoelectric modules. In other words, there is a first heat exchange fluid flow path and a second heat exchange fluid flow path, and a number of thermo electric generator cells arranged in heat transfer communication with both the first heat exchange fluid flow path and the second heat exchanger fluid flow path.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated.

### Brief Description of Drawings

In the following, the invention will be described with reference to the accompanying exemplary, schematic drawings, in which
Figure 1 illustrates an arrangement for managing temperature of liquefied gas fuel in a fuel tank of a marine vessel according to an embodiment of the invention,
Figure 2 illustrates an arrangement for managing temperature of liquefied gas fuel in a fuel tank of a marine vessel according to another embodiment of the invention,
Figure 3 illustrates an arrangement for managing temperature of liquefied gas fuel in a fuel tank of a marine vessel according to still another embodiment of the invention, and
Figure 4 illustrates an arrangement for managing temperature of liquefied gas fuel in a fuel tank of a marine vessel according to still another embodiment of the invention.

### Detailed Description of Drawings

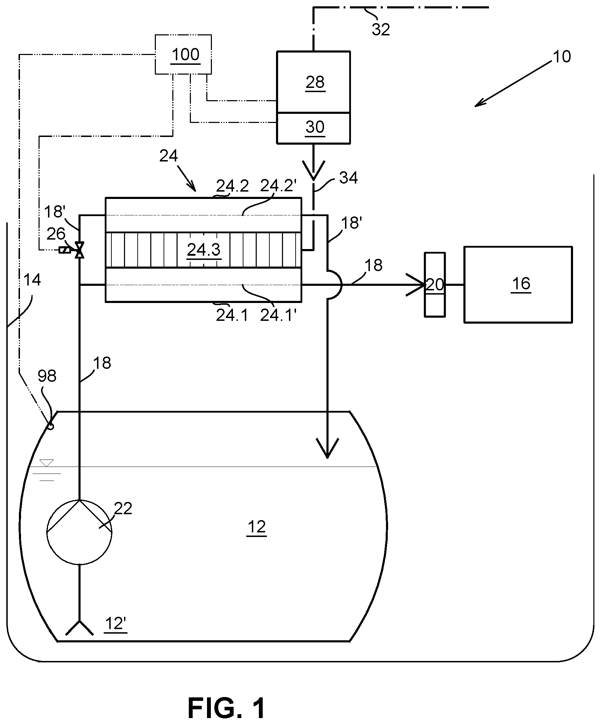

Figure 1 depicts schematically an arrangement 10 for managing temperature of liquefied gas fuel in a fuel tank 12 of a marine vessel 14. The arrangement 10 comprises a fuel tank 12 which is configured to store fuel for use of a gas consumer in the vessel 14. The marine vessel 14 may have several (only one shown here) gas consumers 16, at least its prime movers, such as main engines which are consuming gas as their fuel. In order to feed the fuel to the gas consumers 16 the arrangement comprises a main fuel feed line 18. The main fuel feed line 18 begins from a bottom area 12' of the fuel tank 12 and extends to the gas consumer 16. The main fuel feed line 18 may be provided with various auxiliary components, such as valves, measuring instruments, evaporator, which are all denoted commonly by the block 20. The block 20 may also include a booster pump or pumps for further increasing feed pressure to the gas consumers 16. Naturally, the auxiliary component may be positioned at various locations in the main fuel feed line 18. The main fuel feed line 18 is provided with a fuel transfer pump 22. The fuel transfer pump 22 is shown here inside the tank 12, but it can be positioned also outside the tank.

The arrangement 10 comprises further a first thermoelectric heat exchanger 24. The thermoelectric heat exchanger comprises a first heat exchanger 24.1 and a second heat exchanger 24.2 and a number of thermo electric generator cells 24.3 between the heat exchangers 24.1, 24.2. The first heat exchanger 24.1 and the second heat exchanger 24.2 comprise a first heat exchange fluid flow path 24.1' and a second heat exchange fluid flow path 24.2' which act as flow channels of the heat exchanger. The thermo electric generator cells 24.3 are arranged in heat transfer communication with both the first heat exchange fluid flow path 24.1' and the second heat exchanger fluid flow path 24.2', by means of which a temperature difference over the thermo electric generator cells 24.3 can be maintained, and heat can be transferred between the thermo electric generator cells 24.3 and the first heat exchanger 24.1 and the second heat exchanger 24.2. As is becomes clear the first heat exchange fluid flow path 24.1' and the second heat exchange fluid flow path 24.2' are not in direct heat exchange communication with each other.

In the first thermoelectric heat exchanger 24 the first heat exchange fluid flow path 24.1' is coupled with the main fuel feed line 18, at a location downstream the fuel transfer pump 22. This way the first thermoelectric heat exchanger 24.1 is at the pressure side of the pump 22.

There is a second fuel line 18' which is arranged to lead fuel back to the tank 12 via the first thermoelectric heat exchanger 24. The second fuel line 18' is coupled to the second heat exchange fluid flow path 24.2'. This way it is possible effect on the temperature of the liquefied gas in the tank 12 and thus avoid undesired increase of pressure in the tank. The amount, i.e., flow rate of the liquefied gas fuel led back to the tank 12, is arranged controllable by providing a flow control valve 26 to the second fuel line 18'. Even if the control valve in the second fuel line is shown to be upstream the first thermoelectric heat exchanger 24 it may also be at the downstream side thereof. Also, the temperature of the liquefied gas fuel led back to the tank 12 is arranged controllable by means of the thermo electric generator cells 24.3.

The second fuel line 18' which is coupled to the second heat exchange fluid flow path 24.2' is a branch line from the main fuel feed line 18, and it branches from the main fuel feed line 18 at a location downstream the fuel transfer pump 18. In the embodiment of the figure 1 the branch line 18' branches from the fuel feed line at a location upstream the thermo electric heat exchanger 24. The inlet temperature of the gas entering both the first heat exchange fluid flow path 24.1' and the second heat exchange fluid flow path 24.2' is the same. Supplying electric power to the thermo electric generator cells 24.3 having their polarity set correctly cools down the gas flowing in the second heat exchange fluid flow path 24.2' and heats the gas flowing in the first heat exchange fluid flow path 24.1'.

The operation can be described such that the thermoelectric heat exchanger 24 receives liquefied gas fuel (such as LPG, Ammonia or LNG) from the tank 12 driven by the pump 22. A small portion of the liquefied gas fuel delivered by pump 22 is recycled back to the tank under control of the valve 26 and enters the thermoelectric heat exchanger 24 where it is cooled to a desired lower temperature than what the current temperature in the fuel tank is. The larger portion of the liquefied gas flow is heated the thermoelectric heat exchanger 24 whilst the smaller portion of the flow is cooled. The process requires electric power input to drive the process. Tank temperature regulation is advantageously controlled by controlling the amount of electric power fed to the thermoelectric heat exchanger 24 and polarity applied thereto. Maintaining the control valve 26 open and controlling the temperature by the thermoelectric heat exchanger 24 gives the advantage that in case of a sudden shut down - such as an emergency shutdown - of the main fuel feed line 18 at least partially open control valve 26 mitigates the pressure shock in the line. The power input to the thermo electric generator cells 24.3 is controllable from zero to maximum - depending on cooling needs.

Cooling power to the gas flowing in second fuel line 18' may be controlled such that the outlet temperature in gas stream 18' is kept substantially constant and varying its flow rate, or optionally, the gas flow rated is substantially constant and the outlet temperature of the gas flowing from the thermoelectric heat exchanger 24 is the control variable.

The control may be realized also such that the temperature of the gas in the line 18' reaches a desired minimum temperature, while also the flow rate of the gas is variably controlled.

If it is desired to heat up the liquefied gas in the tank 12 i.e. increasing the tank pressure, the polarity of the thermo electric generator cells 24.3 can be changed and the recycled liquefied gas flow can be heated instead of cooled.

The arrangement comprises an electric power management system 28 connected to the thermo electric generator cells 24.3 of the first thermoelectric heat exchanger 24. The electric power management system 28 is configured to either supply or receive electric current to the thermo electric generator cells 24.3 and manipulate electricity to cope with the demands of power distribution network 32 to which it is connected to, and with the demands of the thermo electric generator cells 24.3. The electric power management system 28 is in data and energy transfer communication 34 with the electric power management system 28. For operation in a mode of cooling the gas by supplying electric power to the thermoelectric heat exchanger 24 the electric power management system comprises a power converter which is connected to a source of electric power. The **power** converted is configured to feed DC power controllably, and with controllable polarity to the thermoelectric heat exchanger. The response of the control to the gas temperature is detected by suitably positioned one or more temperature sensors. Measure temperature is made available to a controller which is configured to control the power converter. In the figures the temperature sensor is shown to measure the temperature of the gaseous phase in the tank, but there may be one or more sensors arranged to the main fuel feed line 18 and/or the second fuel line 18', downstream the thermoelectric heat exchanger 24.

There is also a polarity control unit 30 of the thermo electric generator cells 24.3 arranged in data transfer communication 34 with the thermo electric generator cells 24.3. The polarity control unit 30 is configured to selectably change the polarity of connection of the thermo electric generator cells 24.3 for setting the direction of the heat transfer provided by the thermo electric generator cells 24.3. Supplying electric power to the thermo electric generator cells 24.3 having their polarity set correctly cools down the gas flowing in the second heat exchange fluid flow path 24.2' and heats the gas flowing in the first heat exchange fluid flow path 24.1'.

The arrangement comprises a computer control unit 100. The computer control unit 100 is data transfer communication with at least the electric power management system 28, the polarity control unit 30 and the flow control valve 26. There is also at least one temperature sensor 98 arranged in connection with the tank 12 which is data transfer communication with the computer control unit 100.

The computer control unit 100 is adapted to control the operation of the arrangement 10 according to desired result to be achieved. Temperature of the liquefied gas fuel in the tank 12 can be controlled in efficient manner. The computer control unit 100 is adapted to determine temperature of the liquefied gas in the tank, and
∘ when the temperature in the tank is higher than a predetermined set temperature:
   □ control a flow control valve 26 of second fuel line 18' to lead liquefied gas to the tank via the thermo electric heat exchanger 24,
   □ control the electric power management system 28 to start or increase feeding electric power to the thermo electric generator cells 24.3 and cool down the liquefied gas flowing through the second heat exchange fluid flow path 24.2',
o when the temperature in the tank is lower than or equal to the predetermined set temperature:
   □ control the flow control valve 26 of second fuel line 18' to close to decrease or stop the flow of fuel to the tank via the thermo electric heat exchanger 24,
   □ control the electric power management system to stop or decrease feeding feed electric power to the thermo electric generator cells 24.3.

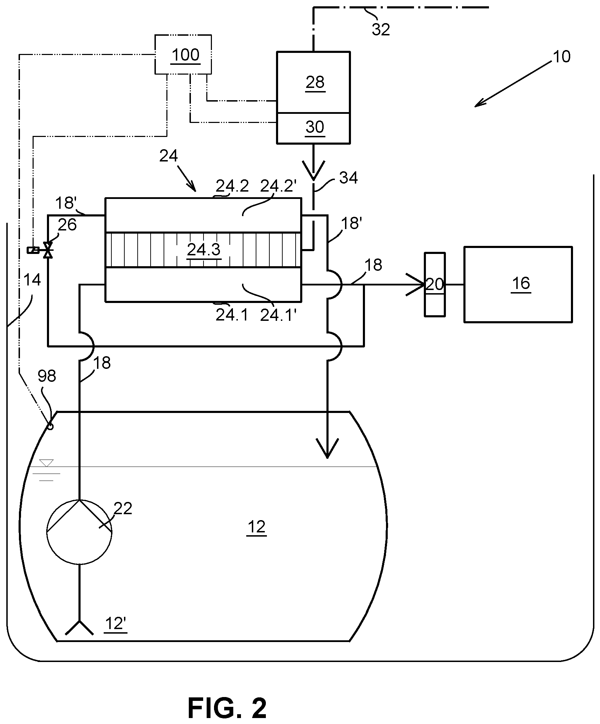

In the figure 2 there is shown an embodiment of the invention. The arrangement 10 for managing temperature of liquefied gas fuel shown in the figure 2 is otherwise similar to that shown and described in the figure 1, except that here the branch line 18' branches from the fuel feed line 18 at a location downstream the thermo electric heat exchanger 24. The inlet temperature of the gas entering the first heat exchange fluid flow path 24.1' equals to the exit temperature of the gas flowing from the second heat exchange fluid flow path 24.2'. In order to facilitate cooling of the tank, the exit temperature of the gas from the first heat exchange fluid flow path 24.1' is cooled to lower temperature than the temperature of the liquefied gas in the tank 12.

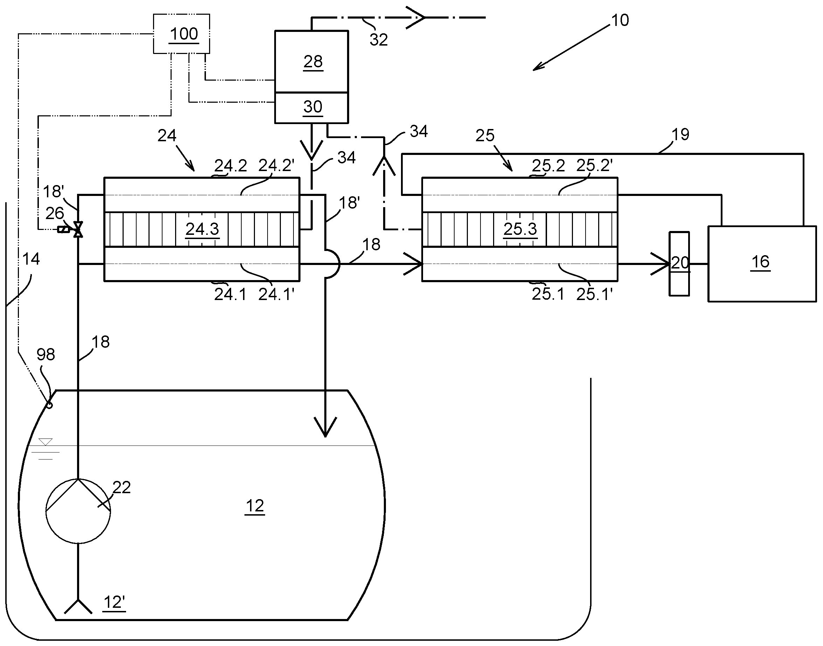

In the figure 3 there is shown another embodiment of the invention. The arrangement for managing temperature of liquefied gas fuel in a fuel tank of a marine vessel arrangement comprises all the elements and functionalities of that shown in the figure 1 but in the figure 3 the arrangement comprises further a second thermoelectric heat exchanger 25. The second thermoelectric heat exchanger 25 can also be used in connection with the embodiments illustrated in the figure 2. The second thermoelectric heat exchanger 25 is substantially similar to the first thermoelectric heat exchanger 24, and it comprises a first heat exchange fluid flow path 25.1' and a second heat exchange fluid flow path 25.2', as well as a plurality of thermo electric generator cells 25.3 arranged in heat transfer communication with both the first heat exchange fluid flow path 25.1' and the second heat exchanger fluid flow path 25.2'. The thermo electric generator cells 25.3 are arranged in heat transfer communication with both the first heat exchange fluid flow path 25.1' and the second heat exchanger fluid flow path 25.2', by means of which a temperature difference over the thermo electric generator cells 24 can be maintained, and heat can be transferred between the thermo electric generator cells 25.3 and the first heat exchanger 25.1 and the second heat exchanger 25.2. As is becomes clear the first heat exchange fluid flow path 25.1' and the second heat exchange fluid flow path 25.2' are not in direct heat exchange communication with each other.

The first thermoelectric heat exchanger 24.1, i.e. the first heat exchange fluid flow path 24.1' is coupled with the main fuel feed line 18. Also, the first heat exchange fluid flow path 25.1' of the second thermoelectric heat exchanger 25 is coupled to the main fuel feed line 18 downstream the first thermoelectric heat exchanger 24, those being this way connected in series. The first thermoelectric heat exchanger 24 is first in the flow direction of the liquefied gas and this way the initial temperature of the gas to be cooled in the first thermoelectric heat exchanger as low as possible, which minimizes the required energy for cooling the liquefied gas returned back to the tank 12, as is explained also in the figure 1.

In the second thermoelectric heat exchanger 25 the second heat exchanger fluid flow path 25.2' is arranged in heat transfer communication with a heat transfer medium flow circuit 19 of the marine vessel, which is here a cooling system of a prime mover 16 of the marine vessel 14. Also the arrangement 10 in the figure 3 comprises an electric power management system 28 connected to the thermo electric generator cells 24.3 of the first thermoelectric heat exchanger 24 and to the thermo electric generator cells 25.3 of the second thermoelectric heat exchanger 25.

The second thermoelectric heat exchanger is configured to produce electric power by its thermo electric generator cells and the second heat exchanger fluid flow path 25.2' is configured to transfer heat to the thermo electric generator cells 25.3 so as to produce electric power, as is depicted by the arrow in the line 34.

The electric power management system 28 is configured to supply the electric power to the thermo electric generator cells 24.3 of the first thermoelectric heat exchanger 24, so as to cool down the liquefied gas flowing through the second heat exchange fluid flow path 24.2' of the first thermoelectric heat exchanger 24 to the tank 13.

The electric power obtained making use of waste heat produced by the prime mover is fed to the first thermoelectric heat exchanger 24 for use in cooling the liquefied gas flowing through the second heat exchanger fluid flow path 24.2' of the first thermoelectric heat exchanger 24. Any surplus electric power is fed to the electric network 32. In both of the thermoelectric heat exchangers the fluid in the first heat exchanger fluid flow path 24.1' is heated and the fluid in the second heat exchanger fluid flow path 24.2' is cooled. The liquefied gas which flows through the first heat exchanger fluid flow paths 24.1', 25.1' may even be partially or totally evaporated.

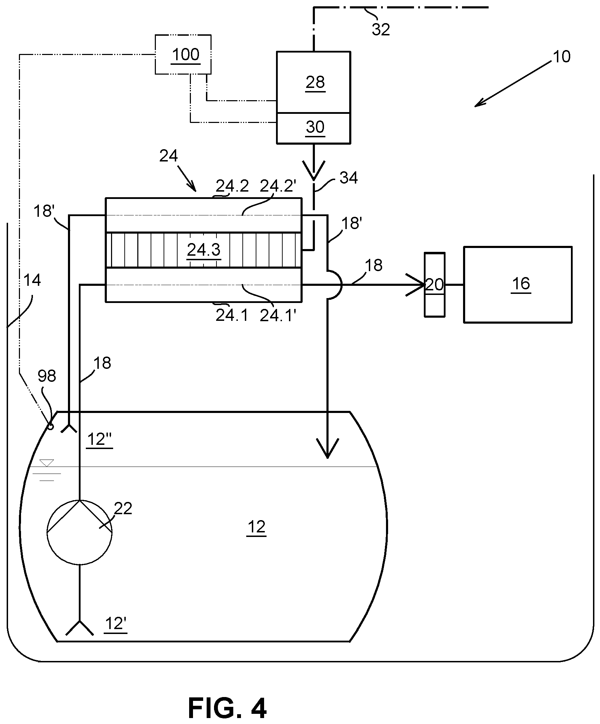

Figure 4 discloses a still another embodiment of the invention. This feature is applicable for any liquefied gases. The pump 22 pumps liquefied gas through the thermoelectric heat exchanger 24. The second fuel line 18' extends from upper part 12" of the tank 12 via the second heat exchange fluid flow path 24.2' of the first thermo-electric heat exchanger 24 back to the tank. Boil off gas is generated from the liquefied gas in the tank by heat ingress, which boil off gas flows freely to the thermoelectric heat exchanger 24 in gaseous form. In the thermoelectric heat exchanger 24it is cooled by applying electric power to the thermo electric generator cells 24.3 and therefore advantageously condensed by cooling in the second heat exchanger fluid flow path 24.2'. The second fuel line 18' does not need a control valve, but switching off the power supply to the thermoelectric heat exchanger 24 stops the flow and there is no need to close off the line. Condensed gas flows further back to the tank and prevents excessive pressure increase in the tank. Also in this embodiment electric power is fed to the thermoelectric heat exchanger 24 for operation as described in preceding embodiments.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. An arrangement (10) for managing temperature of liquefied gas fuel in a fuel tank of a marine vessel (14), the arrangement (10) comprising
- a fuel tank (12),
- a main fuel feed line (18) extending from bottom area (12') of the fuel tank (12) to a gas consumer (16),
- a fuel transfer pump (22) arranged to the main fuel feed line (18),
- a first thermoelectric heat exchanger (24) comprising a first heat exchange fluid flow path (24.1') and a second heat exchange fluid flow path (24.2'), and a number of thermo electric generator cells (24.3) arranged in heat transfer communication with both the first heat exchange fluid flow path (24.1') and the second heat exchanger fluid flow path (24.2'), wherein
- the first heat exchange fluid flow path (24.1') being coupled to the main fuel feed line (18) downstream the fuel transfer pump (22),
- a second fuel line (18') being coupled to the second heat exchange fluid flow path (24.2'), the second fuel line (18') being arranged to lead fuel to the tank (12) via the first thermoelectric heat exchanger (24), **characterized in that** the second fuel line (18') is a branch line, which branches from the main fuel feed line (18) at a location downstream the fuel transfer pump (22) and which branch line (18') is arranged in flow connection with the tank (12) via the thermo electric heat exchanger (24) such that the second heat exchange fluid flow path (24.2') is coupled to the branch line (18').

2. An arrangement (10) for managing temperature of liquefied gas fuel according to the claim 1, **characterized in that** the arrangement (10) comprises an electric power management system (28) connected to the thermo electric generator cells (24.3) of the first thermoelectric heat exchanger (24) and a polarity control unit (30) of the thermo electric generator cells (24.3) of the first thermoelectric heat exchanger (24), which polarity control unit (30) is configured to selectably change the polarity of connection of the thermo electric generator cells (24.3) of first thermoelectric heat exchanger (24) to the electric power management system (28).

3. An arrangement (10) for managing temperature of liquefied gas fuel according to the claim 2, **characterized in that** arrangement (10) comprises a computer control unit adapted to:
• determine temperature of the liquefied gas in the tank (12), and
∘ when the temperature in the tank (12) is higher than a predetermined set temperature:
▪ control a flow control valve (26) of second fuel line (18') to lead liquefied gas to the tank (12) via the first thermo electric heat exchanger (24),
▪ control the electric power management system (28) to start or increase feeding electric power to the thermo electric generator cells (24.3) and cool down the liquefied gas flowing through the second heat exchange fluid flow path (24.2'),
o when the temperature in the tank (12) is lower than or equal to the predetermined set temperature:
▪ control the flow control valve (26) of second fuel line (18') to close to decrease or stop the flow of fuel to the tank (12) via the first thermo electric heat exchanger (24),
▪ control the electric power management system (28) to stop or decrease feeding feed electric power to the thermo electric generator cells (24.3).

4. An arrangement (10) for managing temperature of liquefied gas fuel according to the claim 2, **characterized in that** arrangement (10) comprises a computer control unit adapted to:
• determine temperature of the liquefied gas in the tank (12), and
o when the temperature in the tank (12) is higher than a predetermined set temperature:
▪ control a flow control valve (26) of second fuel line (18') to lead liquefied gas from the main fuel feed line (18) to the tank (12) via the first thermo electric heat exchanger (24),
▪ control the electric power management system (28) to start or increase feeding electric power to the thermo electric generator cells (24.3) and cool down the liquefied gas flowing through the second heat exchange fluid flow path (24.2'),
o when the temperature in the tank (12) is lower than or equal to the predetermined set temperature:
▪ control the flow control valve (26) of second fuel line (18') to close to decrease or stop the flow of fuel from the main fuel feed line (18) to the tank (12) via the first thermo electric heat exchanger (24),
▪ control the electric power management system (28) to stop or decrease feeding feed electric power to the thermo electric generator cells (24.3).

5. An arrangement (10) for managing temperature of liquefied gas fuel according to the claim 1, **characterized in that** the branch line (18') branches from the fuel feed line (18) at a location downstream the thermo electric heat exchanger (24).

6. An arrangement (10) for managing temperature of liquefied gas fuel according to the claim 1, **characterized in that** the branch line (18') branches from the fuel feed line (18) at a location upstream the first thermo electric heat exchanger (24).

7. An arrangement (10) for managing temperature of liquefied gas fuel according to anyone of the preceding claims, **characterized in that** the arrangement (10) comprises a second thermoelectric heat exchanger (25), which comprises a first heat exchange fluid flow path (25.1') and a second heat exchange fluid flow path (25.2'), and a number of thermo electric generator cells (25.3) arranged in heat transfer communication with both the first heat exchange fluid flow path (25.1') and the second heat exchanger fluid flow path (25.2'), in which the first heat exchange fluid flow path (25.1') is coupled to the main fuel feed line (18) downstream the first thermoelectric heat exchanger (24).

8. An arrangement (10) for managing temperature of liquefied gas fuel according to claim 7, **characterized in that** the second heat exchanger fluid flow path (25.2') is arranged in heat transfer communication with a heat transfer medium flow circuit of the marine vessel (14).

9. An arrangement (10) for managing temperature of liquefied gas fuel according to claim 6, **characterized in that** the second heat exchanger fluid flow path (25.2') is arranged in heat transfer communication with a cooling system of a prime mover (16) of the marine vessel (14).

10. An arrangement (10) for managing temperature of liquefied gas fuel according to claim 7, **characterized in that**
the arrangement (10) comprises an electric power management system (28) connected to the thermo electric generator cells (24.3) of the first thermoelectric heat exchanger (24) and to the thermo electric generator cells (25.3) of the second thermoelectric heat exchanger (25),
the second thermoelectric heat exchanger (25) is configured to produce electric power by its thermo electric generator cells (25.3) and the electric power management system (28) is configured to supply the electric power to the thermo electric generator cells (24.3) of the first thermoelectric heat exchanger (24), so as to cool down the liquefied gas flowing through the second heat exchange fluid flow path (24.2') of the first thermoelectric heat exchanger (24) to the tank (12).

11. An arrangement (10) for managing temperature of liquefied gas fuel according to claim 7 and 10, **characterized in that** that arrangement (10) comprises a computer control unit adapted to:
• determine temperature of the liquefied gas in the tank (12), and
∘ when the temperature in the tank (12) is higher than a predetermined set temperature:
□ control a flow control valve (26) of second fuel line (18') to lead liquefied gas from the main fuel feed line (18) to the tank (12) via the second heat exchange fluid flow path (24.2') of the first thermo electric heat exchanger (24),
□ control the electric power management system (28) to receive electric power from the second thermoelectric heat exchanger (25) and to start or increase feeding electric power to the thermo electric generator cells (24.3) of the first thermoelectric heat exchanger (24) and
□ cool down the liquefied gas flowing through the second heat exchange fluid flow path (24.2') of the first thermo electric heat exchanger (24),
o when the temperature in the tank is lower than or equal to the predetermined set temperature:
□ control the flow control valve (26) of second fuel line (18') to close to decrease or stop the flow of fuel from the main fuel feed line (18) to the tank via the first thermo electric heat exchanger (24),
□ control the electric power management system to stop or decrease feeding feed electric power to the thermo electric generator cells (24.3) of the first thermo electric heat exchanger (24),
□ control the electric power management system to feed surplus electric energy from the second thermo electric heat exchanger (25) to an electric network (32).

12. An arrangement (10) for managing temperature of liquefied gas fuel according to claim 1, **characterized in that** the second fuel line (18') extends from upper part of the tank (12) via the second heat exchange fluid flow path (24.2') of the first thermoelectric heat exchanger (24) to the tank (12).

## Patentansprüche

1. Anordnung (10) zum Temperaturmanagement von Flüssiggaskraftstoff in einem Kraftstofftank eines Wasserfahrzeugs (14), wobei die Anordnung (10) umfasst:
- einen Kraftstofftank (12),
- eine Hauptkraftstoffzufuhrleitung (18), die sich vom Bodenbereich (12') des Kraftstofftanks (12) zu einem Gasverbraucher (16) erstreckt,
- eine Kraftstoffförderpumpe (22), die an der Hauptkraftstoffzufuhrleitung (18) angeordnet ist,
- einen ersten thermoelektrischen Wärmetauscher (24), der einen ersten Wärmeaustauschfluid-Strömungspfad (24.1') und einen zweiten Wärmeaustauschfluid-Strömungspfad (24.2') und eine Anzahl von thermoelektrischen Generatorzellen (24.3), die in Wärmeübertragungskommunikation mit sowohl dem ersten Wärmeaustauschfluid-Strömungspfad (24.1') als auch dem zweiten Wärmeaustauschfluid-Strömungspfad (24.2') angeordnet sind, umfasst, wobei
- der erste Wärmeaustauschfluid-Strömungspfad (24.1') mit der Hauptkraftstoffzufuhrleitung (18) stromabwärts der Kraftstoffförderpumpe (22) gekoppelt ist,
- eine zweite Kraftstoffleitung (18'), die mit dem zweiten Wärmeaustauschfluid-Strömungspfad (24.2') gekoppelt ist, wobei die zweite Kraftstoffleitung (18') dazu eingerichtet ist, Kraftstoff über den ersten thermoelektrischen Wärmetauscher (24) zum Tank (12) zu leiten, **dadurch gekennzeichnet, dass** die zweite Kraftstoffleitung (18') eine Zweigleitung ist, welche von der Hauptkraftstoffzufuhrleitung (18) an einer Stelle stromabwärts der Kraftstoffförderpumpe (22) abzweigt, und wobei diese Zweigleitung (18') über den thermoelektrischen Wärmetauscher (24) in Strömungsverbindung mit dem Tank (12) angeordnet ist, so dass der zweite Wärmeaustauschfluid-Strömungspfad (24.2') mit der Zweigleitung (18') gekoppelt ist.

2. Anordnung (10) zum Temperaturmanagement von Flüssiggaskraftstoff nach Anspruch 1, **dadurch gekennzeichnet, dass** die Anordnung (10) ein Elektroenergie-Managementsystem (28), das mit den thermoelektrischen Generatorzellen (24.3) des ersten thermoelektrischen Wärmetauschers (24) verbunden ist, und eine Polaritätssteuereinheit (30) der thermoelektrischen Generatorzellen (24.3) des ersten thermoelektrischen Wärmetauschers (24) umfasst, wobei die Polaritätssteuereinheit (30) dafür ausgelegt ist, wahlweise die Polarität der Verbindung der thermoelektrischen Generatorzellen (24.3) des ersten thermoelektrischen Wärmetauschers (24) mit dem Elektroenergie-Managementsystem (28) zu ändern.

3. Anordnung (10) zum Temperaturmanagement von Flüssiggaskraftstoff nach Anspruch 2, **dadurch gekennzeichnet, dass** die Anordnung (10) eine Computersteuereinheit umfasst, die dazu eingerichtet ist:
• die Temperatur des Flüssiggases im Tank (12) zu bestimmen, und
o wenn die Temperatur im Tank (12) höher als eine vorbestimmte eingestellte Temperatur ist:
▪ ein Durchflussregelventil (26) der zweiten Kraftstoffleitung (18') anzusteuern, um Flüssiggas über den ersten thermoelektrischen Wärmetauscher (24) zum Tank (12) zu leiten,
▪ das Elektroenergie-Managementsystem (28) anzusteuern, um die Einspeisung von elektrischer Energie in die thermoelektrischen Generatorzellen (24.3) zu beginnen oder zu erhöhen und das Flüssiggas, das durch den zweiten Wärmeaustauschfluid-Strömungspfad (24.2') strömt, herunterzukühlen,
o wenn die Temperatur im Tank (12) niedriger als die oder gleich der vorbestimmten eingestellten Temperatur ist:
▪ das Durchflussregelventil (26) der zweiten Kraftstoffleitung (18') zum Schließen anzusteuern, um den Durchfluss von Kraftstoff über den ersten thermoelektrischen Wärmetauscher (24) zum Tank (12) zu verringern oder zu stoppen,
▪ das Elektroenergie-Managementsystem (28) anzusteuern, um die Einspeisung von elektrischer Energie in die thermoelektrischen Generatorzellen (24.3) zu stoppen oder zu verringern.

4. Anordnung (10) zum Temperaturmanagement von Flüssiggaskraftstoff nach Anspruch 2, **dadurch gekennzeichnet, dass** die Anordnung (10) eine Computersteuereinheit umfasst, die dazu eingerichtet ist:
• die Temperatur des Flüssiggases im Tank (12) zu bestimmen, und
∘ wenn die Temperatur im Tank (12) höher als eine vorbestimmte eingestellte Temperatur ist:
▪ ein Durchflussregelventil (26) der zweiten Kraftstoffleitung (18') anzusteuern, um Flüssiggas von der Hauptkraftstoffzufuhrleitung (18) über den ersten thermoelektrischen Wärmetauscher (24) zum Tank (12) zu leiten,
▪ das Elektroenergie-Managementsystem (28) anzusteuern, um die Einspeisung von elektrischer Energie in die thermoelektrischen Generatorzellen (24.3) zu beginnen oder zu erhöhen und das Flüssiggas, das durch den zweiten Wärmeaustauschfluid-Strömungspfad (24.2') strömt, herunterzukühlen,
o wenn die Temperatur im Tank (12) niedriger als die oder gleich der vorbestimmten eingestellten Temperatur ist:
▪ das Durchflussregelventil (26) der zweiten Kraftstoffleitung (18') zum Schließen anzusteuern, um den Durchfluss von Kraftstoff von der Hauptkraftstoffzufuhrleitung (18) über den ersten thermoelektrischen Wärmetauscher (24) zum Tank (12) zu verringern oder zu stoppen,
▪ das Elektroenergie-Managementsystem (28) anzusteuern, um die Einspeisung von elektrischer Energie in die thermoelektrischen Generatorzellen (24.3) zu stoppen oder zu verringern.

5. Anordnung (10) zum Temperaturmanagement von Flüssiggaskraftstoff nach Anspruch 1, **dadurch gekennzeichnet, dass** die Zweigleitung (18') von der Kraftstoffzufuhrleitung (18) an einer Stelle stromabwärts des thermoelektrischen Wärmetauschers (24) abzweigt.

6. Anordnung (10) zum Temperaturmanagement von Flüssiggaskraftstoff nach Anspruch 1, **dadurch gekennzeichnet, dass** die Zweigleitung (18') von der Kraftstoffzufuhrleitung (18) an einer Stelle stromaufwärts des thermoelektrischen Wärmetauschers (24) abzweigt.

7. Anordnung (10) zum Temperaturmanagement von Flüssiggaskraftstoff nach einem der vorhergehenden Ansprüche, **dadurch gekennzeichnet, dass** die Anordnung (10) einen zweiten thermoelektrischen Wärmetauscher (25) umfasst, der einen ersten Wärmeaustauschfluid-Strömungspfad (25.1') und einen zweiten Wärmeaustauschfluid-Strömungspfad (25.2') und eine Anzahl von thermoelektrischen Generatorzellen (25.3), die in Wärmeübertragungskommunikation mit sowohl dem ersten Wärmeaustauschfluid-Strömungspfad (25.1') als auch dem zweiten Wärmeaustauschfluid-Strömungspfad (25.2') angeordnet sind, umfasst, wobei der erste Wärmeaustauschfluid-Strömungspfad (25.1') mit der Hauptkraftstoffzufuhrleitung (18) stromabwärts des ersten thermoelektrischen Wärmetauschers (24) gekoppelt ist.

8. Anordnung (10) zum Temperaturmanagement von Flüssiggaskraftstoff nach Anspruch 7, **dadurch gekennzeichnet, dass** der zweite Wärmeaustauschfluid-Strömungspfad (25.2') in Wärmeübertragungskommunikation mit einem Wärmeübertragungsmedium-Strömungskreislauf des Wasserfahrzeugs (14) angeordnet ist.

9. Anordnung (10) zum Temperaturmanagement von Flüssiggaskraftstoff nach Anspruch 6, **dadurch gekennzeichnet, dass** der zweite Wärmeaustauschfluid-Strömungspfad (25.2') in Wärmeübertragungskommunikation mit einem Kühlsystem einer Kraftmaschine (16) des Wasserfahrzeugs (14) angeordnet ist.

10. Anordnung (10) zum Temperaturmanagement von Flüssiggaskraftstoff nach Anspruch 7, **dadurch gekennzeichnet, dass**
die Anordnung (10) ein Elektroenergie-Managementsystem (28) umfasst, das mit den thermoelektrischen Generatorzellen (24.3) des ersten thermoelektrischen Wärmetauschers (24) und mit den thermoelektrischen Generatorzellen (25.3) des zweiten thermoelektrischen Wärmetauschers (25) verbunden ist, und
der zweite thermoelektrische Wärmetauscher (25) dafür ausgelegt ist, elektrische Energie durch seine thermoelektrischen Generatorzellen (25.3) zu erzeugen, und das Elektroenergie-Managementsystem (28) dafür ausgelegt ist, die elektrische Energie den thermoelektrischen Generatorzellen (24.3) des ersten thermoelektrischen Wärmetauschers (24) zuzuführen, um so das Flüssiggas, das durch den zweiten Wärmeaustauschfluid-Strömungspfad (24.2') des ersten thermoelektrischen Wärmetauschers (24) zum Tank (12) strömt, herunterzukühlen.

11. Anordnung (10) zum Temperaturmanagement von Flüssiggaskraftstoff nach Anspruch 7 und 10, **dadurch gekennzeichnet, dass** die Anordnung (10) eine Computersteuereinheit umfasst, die dazu eingerichtet ist:
• die Temperatur des Flüssiggases im Tank (12) zu bestimmen, und
∘ wenn die Temperatur im Tank (12) höher als eine vorbestimmte eingestellte Temperatur ist:
□ ein Durchflussregelventil (26) der zweiten Kraftstoffleitung (18') anzusteuern, um Flüssiggas von der Hauptkraftstoffzufuhrleitung (18) über den zweiten Wärmeaustauschfluid-Strömungspfad (24.2') des ersten thermoelektrischen Wärmetauschers (24) zum Tank (12) zu leiten,
□ das Elektroenergie-Managementsystem (28) anzusteuern, um elektrische Energie vom zweiten thermoelektrischen Wärmetauscher (25) zu empfangen und die Einspeisung von elektrischer Energie in die thermoelektrischen Generatorzellen (24.3) des ersten thermoelektrischen Wärmetauschers (24) zu beginnen oder zu erhöhen, und
□ das Flüssiggas, das durch den zweiten Wärmeaustauschfluid-Strömungspfad (24.2') des ersten thermoelektrischen Wärmetauschers (24) strömt, herunterzukühlen,
∘ wenn die Temperatur im Tank (12) niedriger als die oder gleich der vorbestimmten eingestellten Temperatur ist:
□ das Durchflussregelventil (26) der zweiten Kraftstoffleitung (18') zum Schließen anzusteuern, um den Durchfluss von Kraftstoff von der Hauptkraftstoffzufuhrleitung (18) über den ersten thermoelektrischen Wärmetauscher (24) zum Tank zu verringern oder zu stoppen,
□ das Elektroenergie-Managementsystem anzusteuern, um die Einspeisung von elektrischer Energie in die thermoelektrischen Generatorzellen (24.3) des ersten thermoelektrischen Wärmetauschers (24) zu stoppen oder zu verringern,
□ das Elektroenergie-Managementsystem anzusteuern, um überschüssige elektrische Energie vom zweiten thermoelektrischen Wärmetauscher (25) in ein Stromnetz (32) einzuspeisen.

12. Anordnung (10) zum Temperaturmanagement von Flüssiggaskraftstoff nach Anspruch 1, **dadurch gekennzeichnet, dass** sich die zweite Kraftstoffleitung (18') vom oberen Teil des Tanks (12) über den zweiten Wärmeaustauschfluid-Strömungspfad (24.2') des ersten thermoelektrischen Wärmetauschers (24) zum Tank (12) erstreckt.

## Revendications

1. Agencement (10) de gestion de la température de gaz liquéfié combustible dans un réservoir de carburant d'un navire maritime (14), l'agencement (10) comprenant
- un réservoir de carburant (12),
- une ligne principale d'alimentation en carburant (18) s'étendant de la partie inférieure (12') du réservoir de carburant (12) à un consommateur de gaz (16),
- une pompe de transfert de carburant (22) disposée sur la ligne principale d'alimentation en carburant (18),
- un premier échangeur thermique thermoélectrique (24) comprenant un premier chemin d'écoulement du fluide d'échange thermique (24.1') et un deuxième chemin d'écoulement du fluide d'échange thermique (24.2'), et un certain nombre de cellules de générateur thermoélectrique (24.3) disposées en communication de transfert de chaleur avec le premier chemin d'écoulement du fluide d'échange thermique (24.1') et le deuxième chemin d'écoulement du fluide d'échange thermique (24.2'), dans lequel
- le premier chemin d'écoulement du fluide d'échange thermique (24.1') est couplé à la ligne principale d'alimentation en carburant (18) en aval de la pompe de transfert de carburant (22),
- une deuxième ligne de carburant (18') est couplée au deuxième chemin d'écoulement du fluide d'échange thermique (24.2'), la deuxième ligne de carburant (18') étant disposée pour diriger le carburant vers le réservoir (12) par le biais du premier échangeur thermique thermoélectrique (24), **caractérisé en ce que** la deuxième ligne de carburant (18') est une ligne secondaire qui part de la ligne principale d'alimentation en carburant (18) en un point en aval de la pompe de transfert de carburant (22) et que ladite ligne secondaire (18') est disposée en liaison d'écoulement avec le réservoir (12) par le biais de l'échangeur thermique thermoélectrique (24) de manière à ce que le deuxième chemin d'écoulement du fluide d'échange thermique (24.2') soit couplé à la ligne secondaire (18').

2. Agencement (10) de gestion de la température de gaz liquéfié combustible selon la revendication 1, **caractérisé en ce que** l'agencement (10) comprend un système de gestion de l'énergie électrique (28) connecté aux cellules de générateur thermoélectrique (24.3) du premier échangeur thermique thermoélectrique (24) et une unité de contrôle de polarité (30) des cellules de générateur thermoélectrique (24.3) du premier échangeur thermique thermoélectrique (24), laquelle unité de contrôle de polarité (30) est configurée pour modifier de manière sélective la polarité de connexion des cellules de générateur thermoélectrique (24.3) du premier échangeur thermique thermoélectrique (24) au système de gestion de l'énergie électrique (28).

3. Agencement (10) de gestion de la température de gaz liquéfié combustible selon la revendication 2, **caractérisé en ce que** l'agencement (10) comprend une unité de commande informatique adaptée pour :
• déterminer la température du gaz liquéfié dans le réservoir (12), et
∘ lorsque la température dans le réservoir (12) est supérieure à une température de consigne prédéterminée :
▪ commander à un régulateur de débit (26) de la deuxième ligne de carburant (18') de diriger du gaz liquéfié vers le réservoir (12) à travers le premier échangeur thermique thermoélectrique (24),
▪ commander au système de gestion de l'énergie électrique (28) de commencer ou d'augmenter l'alimentation en énergie électrique des cellules de générateur thermoélectrique (24.3) et refroidir le gaz liquéfié qui s'écoule à travers le deuxième chemin d'écoulement du fluide d'échange thermique (24.2'),
∘ lorsque la température dans le réservoir (12) est inférieure ou égale à la température de consigne prédéterminée :
▪ commander au régulateur de débit (26) de la deuxième ligne de carburant (18') de fermer pour réduire ou arrêter l'écoulement de carburant vers le réservoir (12) à travers le premier échangeur thermique thermoélectrique (24),
▪ commander au système de gestion de l'énergie électrique (28) d'arrêter ou de réduire l'alimentation en énergie électrique vers les cellules de générateur thermoélectrique (24.3).

4. Agencement (10) de gestion de la température de gaz liquéfié combustible selon la revendication 2, **caractérisé en ce que** l'agencement (10) comprend une unité de commande informatique adaptée pour :
• déterminer la température du gaz liquéfié dans le réservoir (12), et
∘ lorsque la température dans le réservoir (12) est supérieure à une température de consigne prédéterminée :
▪ commander à un régulateur de débit (26) de la deuxième ligne de carburant (18') de diriger du gaz liquéfié de la ligne principale d'alimentation en carburant (18) vers le réservoir (12) par le biais du premier échangeur thermique thermoélectrique (24),
▪ commander au système de gestion de l'énergie électrique (28) de commencer ou d'augmenter l'alimentation en énergie électrique des cellules de générateur thermoélectrique (24.3) et refroidir le gaz liquéfié qui s'écoule à travers le deuxième chemin d'écoulement du fluide d'échange thermique (24.2'),
∘ lorsque la température dans le réservoir (12) est inférieure ou égale à la température de consigne prédéterminée :
▪ commander au régulateur de débit (26) de la deuxième ligne de carburant (18') de fermer pour réduire ou arrêter l'écoulement de carburant de la ligne principale d'alimentation en carburant (18) vers le réservoir (12) à travers le premier échangeur thermique thermoélectrique (24),
▪ commander au système de gestion de l'énergie électrique (28) d'arrêter ou de réduire l'alimentation en énergie électrique des cellules de générateur thermoélectrique (24.3).

5. Agencement (10) de gestion de la température de gaz liquéfié combustible selon la revendication 1, **caractérisé en ce que** la ligne secondaire (18') part de la ligne principale d'alimentation en carburant (18) en un point en aval de l'échangeur thermique thermoélectrique (24).

6. Agencement (10) de gestion de la température de gaz liquéfié combustible selon la revendication 1, **caractérisé en ce que** la ligne secondaire (18') part de la ligne d'alimentation en carburant (18) en un point en amont du premier échangeur thermique thermoélectrique (24).

7. Agencement (10) de gestion de la température de gaz liquéfié combustible selon l'une des revendications précédentes, **caractérisé en ce que** l'agencement (10) comprend un deuxième échangeur thermique thermoélectrique (25), qui comprend un premier chemin d'écoulement du fluide d'échange thermique (25.1') et un deuxième chemin d'écoulement du fluide d'échange thermique (25.2'), et un certain nombre de cellules de générateur thermoélectrique (25.3) disposées en communication de transfert de chaleur avec à la fois le premier chemin d'écoulement du fluide d'échange thermique (25.1') et le deuxième chemin d'écoulement du fluide d'échange thermique (25.2'), dans lequel le premier chemin d'écoulement du fluide d'échange thermique (25.1') est couplé à la ligne principale d'alimentation en carburant (18) en aval du premier échangeur thermique thermoélectrique (24).

8. Agencement (10) de gestion de la température de gaz liquéfié combustible selon la revendication 7, **caractérisé en ce que** le deuxième chemin d'écoulement du fluide d'échange thermique (25.2') est disposé en communication de transfert de chaleur avec un circuit d'écoulement de fluide caloporteur du navire maritime (14).

9. Agencement (10) de gestion de la température de gaz liquéfié combustible selon la revendication 6, **caractérisé en ce que** le deuxième chemin d'écoulement du fluide d'échange thermique (25.2') est disposé en communication de transfert de chaleur avec un système de refroidissement d'un moteur principal (16) du navire maritime (14).

10. Agencement (10) de gestion de la température de gaz liquéfié combustible selon la revendication 7, **caractérisé en ce que**
l'agencement (10) comprend un système de gestion de l'énergie électrique (28) connecté aux cellules de générateur thermoélectrique (24.3) du premier échangeur thermique thermoélectrique (24) et aux cellules de générateur thermoélectrique (25.3) du deuxième échangeur thermique thermoélectrique (25),
le deuxième échangeur thermique thermoélectrique (25) est configuré pour produire de l'énergie électrique par ses cellules de générateur thermoélectrique (25.3) et le système de gestion de l'énergie électrique (28) est configuré pour fournir l'énergie électrique aux cellules de générateur thermoélectrique (24.3) du premier échangeur thermique thermoélectrique (24) afin de refroidir le gaz liquéfié s'écoulant à travers le deuxième chemin d'écoulement du fluide d'échange thermique (24.2') du premier échangeur thermique thermoélectrique (24) vers le réservoir (12).

11. Agencement (10) de gestion de la température de gaz liquéfié combustible selon les revendications 7 et 10, **caractérisé en ce que** l'agencement (10) comprend une unité de commande informatique adaptée pour :
• déterminer la température du gaz liquéfié dans le réservoir (12), et
∘ lorsque la température dans le réservoir (12) est supérieure à une température de consigne prédéterminée :
□ commander à un régulateur de débit (26) de la deuxième ligne de carburant (18') de diriger du gaz liquéfié de la ligne principale d'alimentation en carburant (18) vers le réservoir (12) à travers le deuxième chemin d'écoulement du fluide d'échange thermique (24.2') du premier échangeur thermique thermoélectrique (24),
□ commander au système de gestion de l'énergie électrique (28) de recevoir de l'énergie électrique du deuxième échangeur thermique thermoélectrique (25) et de commencer ou d'augmenter l'alimentation en énergie électrique des cellules de générateur thermoélectrique (24.3) du premier échangeur thermique thermoélectrique (24) et
□ refroidir le gaz liquéfié qui s'écoule à travers le deuxième chemin d'écoulement du fluide d'échange thermique (24.2') du premier échangeur thermique thermoélectrique (24),
o lorsque la température dans le réservoir (12) est inférieure ou égale à la température de consigne prédéterminée :
□ commander au régulateur de débit (26) de la deuxième ligne de carburant (18') de fermer pour réduire ou arrêter l'écoulement de carburant de la ligne principale d'alimentation en carburant (18) vers le réservoir à travers le premier échangeur thermique thermoélectrique (24),
□ commander au système de gestion de l'énergie électrique d'arrêter ou de réduire l'alimentation en énergie électrique des cellules de générateur thermoélectrique (24.3) du premier échangeur thermique thermoélectrique (24),
□ commander au système de gestion de l'énergie électrique d'acheminer l'énergie électrique excédentaire du deuxième échangeur thermique thermoélectrique (25) vers un réseau électrique (32).

12. Agencement (10) de gestion de la température de gaz liquéfié combustible selon la revendication 1, **caractérisé en ce que** la deuxième ligne de carburant (18') s'étend de la partie supérieure du réservoir (12) à travers le deuxième chemin d'écoulement du fluide d'échange thermique (24.2') du premier échangeur thermique thermoélectrique (24) vers le réservoir (12).
